# EUROPÄISCHE PATENTANMELDUNG

(11) **EP 2 842 742 A1**
(43) Veröffentlichungstag der Anmeldung: **04.03.2015**
(21) Anmeldenummer: 14180770.1
(22) Anmeldetag: 13.08.2014
(51) Int. Cl.: B32B 27/40, B60R 13/02

(54) **Dekorteil für einen Fahrzeuginnenraum und Verfahren zur Herstellung des Dekorteils**

(30) Priorität: 16.08.2013 DE 102013108901
(71) Anmelder: Novem Car Interior Design GmbH, 95519 Vorbach (DE)
(72) Erfinder: Egerer, Gerhard, 92724 Trabitz (DE); Haas, Mario, 95419 Ahorntal (DE); Helldörfer, Markus, 95444 Bayreuth (DE)
(74) Vertreter: Schlögl, Markus

(57) **Zusammenfassung**

Die Erfindung betrifft ein Dekorteil (10) für einen Fahrzeuginnenraum, umfassend eine Deckschicht (11) und einen Träger (12), wobei die Deckschicht (11) direkt auf dem Träger (12) aufgebracht ist.

Die Erfindung ist dadurch gekennzeichnet, dass die Deckschicht (11) aus Polyurethan, Kurzzeichen PUR, oder aus Polyurea, Kurzzeichen PUA, besteht, und dass der Träger aus einem Gemisch aus mindestens einem Thermoplasten einerseits und mindestens einem thermoplastischen Elastomer auf Urethanbasis, Kurzzeichen TPU oder TPE-U, andererseits besteht.

## Beschreibung

Die Erfindung betrifft ein Dekorteil für einen Fahrzeuginnenraum und ein Verfahren zur Herstellung dieses Dekorteils.

Diese Dekorteile umfassen eine Deckschicht und einen thermoplastischen Träger. Die Deckschicht soll in den betrachteten Dekorteilen direkt auf dem Träger aufgebracht sein. Die Deckschicht kann sich hierbei über den gesamten Träger erstrecken, es ist aber ebenso möglich, dass sie nur einem Teilbereich des Trägers zugeordnet ist.

Im Automobilbereich werden hohe Anforderungen an die Belastbarkeit und Lebensdauer der Dekorteile für den Fahrzeuginnenraum gestellt. Insbesondere muss auch unter extremen klimatischen Bedingungen, insbesondere bei hohen und niedrigen Temperaturen und häufigem Temperaturwechsel, die dauerhafte Haftung zwischen Deckschicht und Träger gewährleistet sein.

Die direkte Aufbringung von Deckschichten aus Polyurethan (Kurzzeichen PUR) oder aus Polyurea (Kurzzeichen PUA) auf einem thermoplastischen Träger ist bekannt. Jedoch konnte hinsichtlich der Verbundhaftung zwischen den thermoplastischen Trägern und den Deckschichten keine dauerhafte Verbindung gewährleistet werden, die den gängigen Anforderungen für den automobilen Innenraum genügen. Auch die einheitliche Ausbildung der Deckschicht über einem Träger aus PUR oder PUA erfüllt nicht die Anforderungen.

Der vorliegenden Erfindung liegt die Aufgabe zugrunde, ein neues Dekorteil für einen Fahrzeuginnenraum und ein Verfahren zur Herstellung dieses Dekorteils anzugeben, insbesondere ein Dekorteil mit verbesserter Haftung zwischen Deckschicht und Träger bei Verwendung von PUR oder PUA als Deckschichtmaterial. Vorzugsweise soll das neue Dekorteil die im Automobilbereich gestellten hohen Haftungsanforderungen zwischen Deckschicht und Träger erfüllen.

Diese Aufgabe wird hinsichtlich des Dekorteils durch die Merkmale des Anspruchs 1 und hinsichtlich des Verfahrens durch die Merkmale des Anspruchs 9 gelöst. Vorteilhafte Ausgestaltungen und Weiterbildungen sind in den abhängigen Ansprüchen angegeben.

Das erfindungsgemäße Dekorteil für einen Fahrzeuginnenraum umfasst eine Deckschicht und einen Träger. Die Deckschicht ist direkt auf dem Träger aufgebracht, insbesondere ohne zusätzliche Haftvermittler. Die Erfindung sieht vor, dass die Deckschicht aus Polyurethan (Kurzzeichen PUR) oder aus Polyurea (Kurzzeichen PUA) besteht und dass der Träger aus einem Gemisch aus mindestens einem Thermoplast einerseits und mindestens einem thermoplastischen Elastomer auf Urethanbasis (Kurzzeichen TPU (inbegriffen RTPU) oder auch TPE-U) andererseits besteht. Bei dem TPU kann es sich nicht nur um weichen TPU handeln, vielmehr kommt ein TPU beliebiger Härte von vergleichsweise weich bis vergleichsweise hart in Betracht. Das Elastizitätsmodul (E-Modul) des vorgesehenen TPU kann beispielsweise im Bereich von 10 MPa bis 10.000 MPa (Megapascal) liegen.

Die Vorteile der Erfindung ergeben sich insbesondere aus dem Anteil eines thermoplastischen Elastomers auf Urethanbasis TPU im Träger. Versuche haben gezeigt, dass die Haftung zwischen einer Deckschicht aus PUR oder PUA einerseits und einem Träger aus einem Gemisch aus einem Thermoplast und aus TPU andererseits deutlich verbessert ist als bei einem Träger ohne TPU-Anteil. Erfindungsgemäße Dekorteile können auch die hohen Anforderungen an die Beständigkeit der Haftung zwischen den Schichten im Automobilbereich erfüllen.

Die Deckschicht kann transparent oder transluzent ausgebildet sein, so dass der Träger auf einer vorgesehenen Sichtseite des Dekorteils erkennbar ist. Die Deckschicht kann aber auch undurchsichtig, insbesondere unifarben ausgebildet sein.

Die Trennschicht zwischen Deckschicht und Träger kann, bis auf eine übergeordnete dreidimensionale Form des Dekorteils, eben oder glatt ausgebildet sein, das heißt die Trennschicht folgt der äußeren Form des Dekorteils ohne eigene dreidimensionale Feinstrukturierung. Es ist aber auch möglich, zur Verbesserung der Haftung die Trennschicht zwischen Deckschicht und Träger mit einer dreidimensionalen Feinstruktur zusätzlich zur äußeren Form des Dekorteils auszubilden. Beispielsweise wird die relevante Oberfläche des Trägers bei der Ausbildung des Trägers mit einer entsprechenden dreidimensionalen Feinstruktur versehen und anschließend die Deckschicht hierauf aufgebracht, wobei das Material der Deckschicht in die dreidimensionale Feinstruktur des Trägers eindringt.

Eine Weiterbildung der Erfindung sieht vor, dass der Thermoplast im Gemisch, aus dem der Träger besteht, ein Polycarbonat (Kurzzeichen PC) oder ein Acrylnitril-Butadien-Styrol (Kurzzeichen ABS) oder ein Polyamid (Kurzzeichen PA) oder ein Polypropylen (Kurzzeichen PP) oder ein Styrol-Acrylnitril (Kurzzeichen SAN) oder ein Styrol-Maleinsäureanhydrid (Kurzzeichen SMA) oder ein Polyphenylenether (Kurzzeichen PPE) oder ein Polyphenylenoxid (Kurzzeichen PPO) oder ein Blend aus PC und ABS (Kurzzeichen PC/ABS oder ABS/PC) oder ein Blend aus ABS und PA (Kurzzeichen ABS/PA oder PA/ABS) oder ein Blend aus PC und SAN (Kurzzeichen PC/SAN oder SAN/PC) ist.

Bei den angegebenen Blends kann ein beliebiges Verhältnis zwischen den jeweiligen Bestandteilen gewählt werden. Beispielsweise kann in PC/ABS bzw. ABS/PC der überwiegende Anteil sowohl PC als auch ABS sein, beide Bestandteile können aber auch mit gleichem Anteil enthalten sein.

Der Gewichtsanteil des TPU am Gemisch, aus dem der Träger besteht, kann zwischen 1% und 50% liegen, insbesondere zwischen 5% und 25%.

Bei dem Gemisch, aus dem der Träger besteht, und/oder bei dem Thermoplast im Gemisch, aus dem der Träger besteht, und/oder bei dem TPU im Gemisch, aus dem der Träger besteht, kann es sich auch um ein Compound handeln, dem Additive, insbesondere Verstärkungsstoffe, beispielsweise Glasfasern, beigemischt sind.

Die Deckschicht kann mittels RIM-Verfahren (Reaction Injection Moulding) hergestellt sein. Der Träger kann mittels Spritzgießen hergestellt sein.

Das erfindungsgemäße Verfahren zum Herstellen des erfindungsgemäßen Dekorteils sieht vor, dass zunächst der Träger mittels Spritzgießen in einem Werkzeug hergestellt wird und anschließend die Deckschicht an den Träger mittels Gießen oder RIM angebracht wird.

Vorzugsweise erfolgen die Herstellung des Trägers und die anschließende Anbringung der Deckschicht in demselben Werkzeug. Hierzu kann beispielsweise eine Werkzeugtechnik verwendet werden, welche nach dem Spritzgießen des Trägers das Bauteil in eine weitere Kavität umsetzt und dort dann anschließend die Deckschicht appliziert werden kann. Es kann hierzu aber beispielsweise auch ein weiteres Werkzeug zum Aufbringen der Deckschicht auf dem Träger verwendet werden. Hierzu wird der Träger in ein Werkzeug eingelegt, ein entsprechender Hohlraum ermöglicht es dann, die Deckschicht aufzubringen.

An dem Träger können Befestigungselemente zur Anbringung des Dekorteils im Fahrzeuginnenraum vorgesehen sein, insbesondere einstückig ausgebildet sein.

Grundsätzlich kann das erfindungsgemäße Dekorteil beliebige Abmessungen aufweisen. In üblichen Anwendungen eignet sich beispielsweise ein Dekorteil mit einer Dicke von etwa 2 bis 5 mm. Typischerweise ist die Deckschicht dünner als der Träger ausgebildet. Beispielsweise kann die Deckschicht etwa 0,3 bis 2 mm dick sein, z.B. etwa 1 mm, und der Träger kann etwa 2 bis 5 mm dick sein, z.B. etwa 2,5 mm.

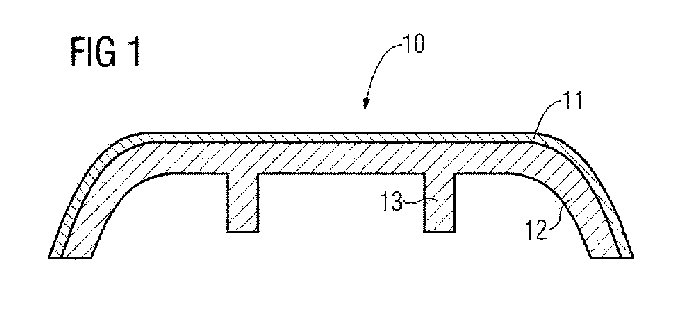

Die Erfindung wird nachstehend auch hinsichtlich weiterer Merkmale und Vorteile anhand der Beschreibung eines Ausführungsbeispiels und unter Bezugnahme auf die beiliegende, schematische Zeichnung näher erläutert. Dabei zeigt
- FIG 1: ein Ausführungsbeispiel eines erfindungsgemäßen Dekorteils in einer schematischen Querschnittsdarstellung.

FIG 1 zeigt in einer schematischen Querschnittsdarstellung ein Ausführungsbeispiel eines erfindungsgemäßen Formteils 10. Das Formteil 10 umfasst eine Deckschicht 11 an der in einem eingebauten Zustand als Sichtseite vorgesehenen Seite des Formteils 10. Auf die Deckschicht 11 folgt ein Träger 12, der Befestigungselemente 13 ausbildet, über die das Formteil 10 in einem Fahrzeuginnenraum als Dekorteil angebracht werden kann.

Die Deckschicht 11 ist direkt auf dem Träger 12 aufgebracht, ohne zusätzlichen Haftvermittler. Die Haftung zwischen Deckschicht 11 und Träger 12 wird daher über den direkten Kontakt von Deckschicht 11 und Trägerschicht 12 an der Trennfläche zwischen Deckschicht 11 und Träger 12 hergestellt. Die Erfüllung der an die Haftung gestellten Anforderungen wird daher durch die erfindungsgemäß vorgesehenen Materialien, aus denen Deckschicht 11 und Träger 12 bestehen, gewährleistet. Dementsprechend besteht die Deckschicht 11 aus Polyurethan (Kurzzeichen PUR) oder aus Polyurea (Kurzzeichen PUA) und der Träger aus einem Gemisch aus mindestens einem Thermoplast einerseits und mindestens einem thermoplastischen Elastomer auf Urethanbasis (Kurzzeichen TPU (inbegriffen RTPU) oder TPE-U) andererseits.

### Bezugszeichenliste

- 10: Dekorteil
- 11: Deckschicht
- 12: Träger
- 13: Befestigungselement

## Patentansprüche

1. Dekorteil (10) für einen Fahrzeuginnenraum, umfassend eine Deckschicht (11) und einen Träger (12), wobei die Deckschicht (11) direkt auf dem Träger (12) aufgebracht ist,
**dadurch gekennzeichnet,**
**dass** die Deckschicht (11) aus Polyurethan, Kurzzeichen PUR, oder aus Polyurea, Kurzzeichen PUA, besteht, und
**dass** der Träger aus einem Gemisch aus mindestens einem Thermoplast einerseits und mindestens einem thermoplastischen Elastomer auf Urethanbasis, Kurzzeichen TPU (inbegriffen RTPU) oder TPE-U, andererseits besteht.

2. Dekorteil nach Anspruch 1,
**dadurch gekennzeichnet,**
**dass** die Deckschicht (11) ohne zusätzlichen Haftvermittler direkt auf dem Träger (12) aufgebracht ist.

3. Dekorteil nach Anspruch 1 oder 2,
**dadurch gekennzeichnet,**
**dass** die Deckschicht (11) transparent oder transluzent oder unifarben ist.

4. Dekorteil nach einem der Ansprüche 1 bis 3,
**dadurch gekennzeichnet,**
**dass** die Trennschicht zwischen Deckschicht (11) und Träger (12) eben oder glatt ausgebildet ist oder eine dreidimensionale Feinstruktur aufweist.

5. Dekorteil nach einem der Ansprüche 1 bis 4,
**dadurch gekennzeichnet,**
**dass** der Thermoplast im Gemisch, aus dem der Träger (12) besteht, ein Polycarbonat, Kurzzeichen PC, oder ein Acrylnitril-Butadien-Styrol, Kurzzeichen ABS, oder ein Polyamid, Kurzzeichen PA, oder ein Polypropylen, Kurzzeichen PP, oder ein Styrol-Acrylnitril, Kurzzeichen SAN, oder ein Styrol-Maleinsäureanhydrid, Kurzzeichen SMA, oder ein Polyphenylenether, Kurzzeichen PPE, oder ein Polyphenylenoxid, Kurzzeichen PPO, oder ein Blend aus PC und ABS, Kurzzeichen PC/ABS oder ABS/PC, oder ein Blend aus ABS und PA, Kurzzeichen ABS/PA oder PA/ABS, oder ein Blend aus PC und SAN, Kurzzeichen PC/SAN oder SAN/PC, ist.

6. Dekorteil nach einem der Ansprüche 1 bis 5,
**dadurch gekennzeichnet,**
**dass** der Gewichtsanteil des TPU am Gemisch, aus dem der Träger (12) besteht, zwischen 1% und 50% liegt, insbesondere zwischen 5% und 25%.

7. Dekorteil nach einem der Ansprüche 1 bis 6,
**dadurch gekennzeichnet,**
**dass** es sich bei dem Gemisch, aus dem der Träger besteht, und/oder bei dem Thermoplast im Gemisch, aus dem der Träger besteht, und/oder bei dem TPU im Gemisch, aus dem der Träger besteht, um ein Compound handelt, dem Additive, insbesondere Verstärkungsstoffe, beigemischt sind.

8. Dekorteil nach einem der Ansprüche 1 bis 7,
**dadurch gekennzeichnet,**
**dass** die Deckschicht (11) mittels RIM-Verfahren und der Träger (12) mittels Spritzgießen hergestellt ist.

9. Verfahren zum Herstellen eines Dekorteils nach einem der Ansprüche 1 bis 8,
**dadurch gekennzeichnet,**
**dass** zunächst der Träger (12) mittels Spritzgießen in einem Werkzeug hergestellt wird, und
**dass** anschließend die Deckschicht (11) an den Träger (12) mittels Gießen oder RIM angebracht wird.

10. Verfahren nach Anspruch 9,
**dadurch gekennzeichnet,**
**dass** die Herstellung des Trägers (12) und die anschließende Anbringung der Deckschicht (11) in demselben Werkzeug erfolgt, insbesondere durch Umsetzen des Trägers (12) nach seiner Herstellung in eine weitere Kavität zur Anbringung der Deckschicht (11).
